# EUROPÄISCHE PATENTSCHRIFT

(11) **EP 3 742 526 B1**
(45) Veröffentlichungstag und Bekanntmachung des Hinweises auf die Patenterteilung: **28.02.2024**
(21) Anmeldenummer: 19176361.4
(22) Anmeldetag: 24.05.2019
(51) Int. Cl.: H01M 4/04, H01M 4/66, H01M 10/052, H01M 10/0585, H01M 10/0587, H01M 10/04

(54) **ELEKTROCHEMISCHE ZELLE UND VERFAHREN ZU IHRER HERSTELLUNG**
ELECTROCHEMICAL CELL AND METHOD FOR ITS PRODUCTION
ÉLÉMENT ÉLECTROCHIMIQUE ET SON PROCÉDÉ DE FABRICATION

(43) Veröffentlichungstag der Anmeldung: 25.11.2020
(73) Patentinhaber: VARTA Microbattery GmbH, 73479 Ellwangen Jagst (DE)
(72) Erfinder: BECK, Bernd, 86754 Munningen (DE); ENSLING, David, 73479 Ellwangen (DE); HALD Rainer, 73479 Ellwangen (DE); PYTLIK, Edward, 73479 Ellwangen (DE); STOCK, Stefan, 73492 Rainau (DE)
(74) Vertreter: Ostertag & Partner Patentanwälte mbB

(56) Entgegenhaltungen:
- DE-A1- 10 031 453
- DE-C2- 10 031 453
- US-A1- 2014 079 872

## Beschreibung

Die nachfolgend beschriebene Erfindung betrifft eine elektrochemische Zelle mit einem Elektroden-Separator-Verbund mit einer Anode, mindestens einem Separator und einer Kathode.

Derartige Zellen sind grundsätzlich bereits bekannt, beispielsweise aus der DE 10 2009 060 800 A1 In dieser deutschen Patentanmeldung sind zylindrische Wickel aus Elektroden-Separator-Verbünden beschrieben, die in zylindrische Metallgehäuse eingesetzt werden. Zur elektrischen Kontaktierung der Elektroden werden Stromkollektoren eingesetzt, die mit Elektrodenaktivmaterialien beladen sind. Die Stromkollektoren sind jeweils mit einer Metallfolie verschweißt, die als separater Stromleiter fungiert und die Stromkollektoren elektrisch mit dem Gehäuse verbindet.

Die in der DE 10 2009 060 800 A1 beschriebene Vorgehensweise zur elektrischen Kontaktierung der Elektroden ist effizient und kostengünstig. In bestimmten Anwendungsfällen bietet sie aber Nachteile. Problematisch ist beispielsweise die elektrische Anbindung der Elektroden über die Metallfolien. Wenn von derart angebundenen Elektroden hohe Ströme in kurzer Zeit gespeichert oder abgegeben werden sollen, erhitzen sich die Metallfolien sehr stark.

Aus der WO 2017/215900 A1 ist eine elektrochemische Zelle der gattungsgemäßen Art bekannt, bei der der Elektroden-Separator-Verbund sowie dessen Elektroden bandförmig ausgebildet sind und in Form eines Wickels oder Stapels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel oder Stapel austreten. Zur elektrischen Kontaktierung der Stromkollektoren weist die Zelle mindestens eine Kontaktplatte auf, die auf einem der Längsränder derart aufliegt, dass sich eine linienartige Kontaktzone ergibt. Die Kontaktplatte ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden als beispielsweise von den aus der DE 10 2009 060 800 A1 bekannten Zellen.

Problematisch ist bei den in der WO 2017/215900 A1 beschriebenen Zellen allerdings, dass es sehr schwierig ist, die Längsränder und die Kontaktplatten miteinander zu verschweißen. Im Verhältnis zu den Kontaktplatten weisen die Stromkollektoren der Elektroden eine ausgesprochen geringe Dicke auf. Der Randbereich der Stromkollektoren ist daher mechanisch außerordentlich empfindlich und kann während der Schweißvorgangs unbeabsichtigt niedergedrückt oder niedergeschmolzen werden. Weiterhin kann es beim Anschweißen der Kontaktplatten zu einem Schmelzen von Separatoren des Elektroden-Separator-Verbunds kommen. In Extremfällen können hieraus Kurzschlüsse resultieren.

Aus der DE 10031453 A1 und der US 6432574 B1 ist es bekannt, dass auf den Stromkollektor einer Elektrode an einem überstehenden Rand eine poröse Folie aufgebracht werden kann. Bei der porösen Folie handelt es sich hierbei um ein Vlies aus Kunstharz oder ein Metall- bzw. Schaumstoffharz".

Der vorliegenden Erfindung lag die Aufgabe zugrunde, elektrochemische Zellen der gattungsgemäßen Art bereitzustellen, die sich gegenüber dem zitierten Stand der Technik nicht nur durch eine verbesserte Strombelastbarkeit sondern auch durch eine verbesserte Herstellbarkeit auszeichnen.

Zu Lösung dieser Aufgabe schlägt die Erfindung die elektrochemische Zelle mit den Merkmalen des Anspruchs 1 und das Verfahren mit den Merkmalen des Anspruchs 13 vor. Weiterbildungen der Erfindung sind Gegenstand von Unteransprüchen. Der Wortlaut sämtlicher Ansprüche wird hiermit durch Bezugnahme zum Inhalt der Beschreibung gemacht.

Die erfindungsgemäße elektrochemische Zelle zeichnet sich stets durch die unmittelbar folgenden Merkmale a - d aus:
a. Die Zelle umfasst einen Elektroden-Separator-Verbund mit einer Anode, mindestens einem Separator und einer Kathode, und
b. die Anode umfasst einen Anodenstromkollektor, der eine aus mindestens einem Metall bestehende Oberfläche aufweist, die mit mindestens einer Schicht aus einem negativen Elektrodenaktivmaterial beladen ist, und
c. die Kathode umfasst einen Kathodenstromkollektor, der eine aus mindestens einem Metall bestehende Oberfläche aufweist, die mit mindestens einer Schicht aus einem positiven Elektrodenaktivmaterial beladen ist, und
d. die Oberfläche des Anodenstromkollektors und/oder die Oberfläche des Kathodenstromkollektors umfasst mindestens einen freien Bereich, der nicht mit dem jeweiligen Elektrodenaktivmaterial beladen ist.

Besonders zeichnet sich die Zelle durch das folgende Merkmal aus:
e. In dem mindestens einen freien Bereich ist die Oberfläche des Anodenstromkollektors und/oder die Oberfläche des Kathodenstromkollektors mit einem Stützmaterial beschichtet, das thermisch beständiger als die damit beschichtete Oberfläche ist, wobei es sich bei dem Stützmaterial um ein keramisches Material, ein glaskeramisches Material oder um ein Glas handelt.

"Thermisch beständiger" soll hierbei bedeuten, dass das Stützmaterial bei einer Temperatur, bei der die Oberfläche schmilzt, einen festen Zustand behält. Es weist also entweder einen höheren Schmelzpunkt als die Oberfläche auf oder aber es sublimiert oder zersetzt sich erst bei einer Temperatur, bei der die Oberfläche bereits geschmolzen ist.

Bevorzugt weisen sowohl die Oberfläche des Anodenstromkollektors als auch die Oberfläche des Kathodenstromkollektors jeweils einen freien Bereich auf, der nicht mit dem jeweiligen Elektrodenaktivmaterial beladen ist. In einer Weiterbildung ist es bevorzugt, dass sowohl der freie Bereich auf der Oberfläche des Anodenstromkollektors als auch der freie Bereich auf der Oberfläche des Kathodenstromkollektors mit dem Stützmaterial beschichtet sind. Besonders bevorzugt wird für jeden der Bereiche das gleiche Stützmaterial verwendet.

Bei der erfindungsgemäßen Zelle handelt es sich bevorzugt um eine sekundäre Zelle, also eine wieder aufladbare Zelle. Als Elektrodenaktivmaterialien kommen für die erfindungsgemäße Zelle daher vorzugsweise Materialien in Betracht, die in sekundären elektrochemischen Zellen zum Einsatz kommen können.

Besonders bevorzugt handelt es sich bei der elektrochemischen Zelle um eine Lithium-Ionen-Zelle. Als Elektrodenaktivmaterialien kommen in diesem Fall sämtliche Materialien in Frage, die Lithium-Ionen aufnehmen und wieder abgeben können. Das negative Elektrodenaktivmaterial kann beispielsweise ein Material auf Kohlenstoffbasis wie graphitischer Kohlenstoff oder ein anderes zur Interkalation von Lithium-Ionen befähigtes Material sein. Auch Metalle und Halbmetalle, die mit Lithium intermetallische Phasen bilden können, beispielsweise Silizium, können als negatives Elektrodenmaterial zum Einsatz kommen, insbesondere auch in einer Mischung mit einem zur Interkalation von Lithium-Ionen befähigten Material auf Kohlenstoffbasis. Als positives Elektrodenaktivmaterial kommen beispielsweise Lithium-Metalloxid-Verbindungen und Lithium-Metallphosphat-Verbindungen wie LiCoO₂ und LiFePO₄ in Frage. Geeignet sind weiterhin Materialien auf Basis von NMC (Lithium-Nickel-Mangan-Kobalt-Oxid), LTO (Lithium-Titanat) und auf Basis von NCA (Lithium-Nickel-Kobalt-Aluminium-Oxid).

In einer weiteren bevorzugten Ausführungsform kann es sich bei der erfindungsgemäßen Zelle um eine Nickel-Metallhydrid-Zelle handeln, die auf der Seite der negativen Elektrode als Elektrodenaktivmaterial eine Wasserstoffspeicherlegierung aufweist und auf der Seite der positiven Elektrode Nickelhydroxid / Nickeloxyhydroxid.

Weiterhin können die Elektroden der erfindungsgemäße Zelle wie die Elektroden der in der WO 2016/005529 A1 und in der WO 2016/005528 A2 beschriebenen Systeme ausgebildet sein. In diesen Dokumenten sind Systeme beschrieben, bei denen die positive Elektrode ein Elektrodenaktivmaterial auf Basis von Nickeloxyhydroxid / Nickelhydroxid aufweist während die negative Elektrode als Elektrodenaktivmaterial eine Mischung aus Aktivkohle und einer Wasserstoffspeicherlegierung oder eine Mischung aus Aktivkohle und Eisen in metallischer und/oder oxidierter Form enthält.

In allen genannten Fällen liegen die Elektrodenaktivmaterialien sowohl auf der Seite der positiven als auch auf der Seite der negativen Elektrode bevorzugt partikulär vor.

Neben den Elektrodenaktivmaterialien und den Stromkollektoren können die Elektroden der erfindungsgemäßen Zellen noch weitere Komponenten aufweisen. Üblich sind insbesondere Elektrodenbinder und Leitmittel. Die Elektrodenbinder gewährleisten die mechanische Stabilität der Elektroden und sorgen für die elektrische und mechanische Kontaktierung von Elektrodenaktivmaterialpartikeln untereinander sowie zum Stromkollektor. Leitmittel wie Ruß dienen dazu, die elektrische Leitfähigkeit der Elektroden zu erhöhen.

In aller Regel umfasst der Elektroden-Separator-Verbund einen Elektrolyten, mit dem die Elektroden getränkt sind und der den bei einer Ladung oder Entladung der Zelle auftretenden Ionenstrom zwischen den Elektroden der Zelle gewährleistet. Bei Lithium-Ionen-Batterien werden als Elektrolyt meist Mischungen aus organischen Carbonaten eingesetzt, die ein Lithium-Leitsalz enthalten. Bei Nickel-Metallhydrid-Zellen und den in der WO 2016/005529 A1 und in der WO 2016/005528 A2 beschriebenen Zellen werden als Elektrolyt bevorzugt wässrige alkalische Lösungen verwendet.

Der mindestens eine Separator dient dazu, einen unmittelbaren Kontakt entgegengesetzt gepolter Elektroden zu unterbinden. Gleichzeitig muss er durchlässig für Ionen sein, die bei Lade- und Entladevorgängen zwischen den Elektroden hin- und herwandern. Für den Elektroden-Separator-Verbund der erfindungsgemäßen Zelle kommen als Separatoren insbesondere Separatoren aus porösen Kunststofffolien in Frage, beispielsweise aus einem Polyolefin oder aus einem Polyetherketon. Auch Vliese und Gewebe aus diesen Materialien können zum Einsatz kommen.

In der Regel umfasst der Elektroden-Separator-Verbund die Elektroden und den mindestens einen Separator in der Sequenz positive Elektrode / Separator / negative Elektrode. In bevorzugten Ausführungsformen liegt der Verbund mit zwei Separatoren vor, beispielsweise mit den möglichen Sequenzen negative Elektrode / erster Separator / positive Elektrode / zweiter Separator oder positive Elektrode / erster Separator / negative Elektrode / zweiter Separator.

In einigen Ausführungsformen kann der Elektroden-Separator-Verbund auch mehr als eine positive oder mehr als eine negative Elektrode aufweisen. So ist es beispielsweise möglich, dass der Verbund die Sequenz negative Elektrode / erster Separator / positive Elektrode / zweiter Separator / negative Elektrode oder die Sequenz positive Elektrode / erster Separator / negative Elektrode / zweiter Separator / positive Elektrode aufweist.

Innerhalb des Verbundes sind die Elektroden und die Separatoren bevorzugt über Lamination und/oder Verklebung miteinander verbunden.

Die Stromkollektoren in den Elektroden dienen dazu, die Elektrodenaktivmaterialien möglichst großflächig elektrisch zu kontaktieren.

Besonders bevorzugt zeichnen sich die Stromkollektoren der erfindungsgemäßen Zelle und damit auch die erfindungsgemäße Zelle selbst durch mindestens eines der unmittelbar folgenden zusätzlichen Merkmale a. bis f. aus:
a. Das mindestens eine Metall, aus dem die Oberfläche des Anodenstromkollektors besteht, umfasst mindestens ein Mitglied aus der Gruppe mit Kupfer, einer Kupferlegierung, Titan, einer Titanlegierung, Nickel, einer Nickellegierung und Edelstahl.
b. Der Anodenstromkollektor besteht aus dem mindestens einen Metall.
c. DerAnodenstromkollektor ist eine Metallfolie, ein Metallschaum, ein textiles Flächengebilde oder ein Streckmetall.
d. Das mindestens eine Metall, aus dem die Oberfläche des Kathodenstromkollektors besteht, umfasst mindestens ein Mitglied aus der Gruppe mit Aluminium, einer Aluminiumlegierung, Titan, einer Titanlegierung und Edelstahl.
e. Der Kathodenstromkollektor besteht aus dem mindestens einen Metall.
f. Der Kathodenstromkollektor ist eine Metallfolie, ein Metallschaum, ein textiles Flächengebilde oder ein Streckmetall.

In bevorzugten Ausführungsformen sind die unmittelbar vorstehenden Merkmale a. bis c. alle gleichzeitig in Kombination miteinander verwirklicht. In weiteren bevorzugten Ausführungsformen sind die unmittelbar vorstehenden Merkmale d. bis f. alle gleichzeitig in Kombination miteinander verwirklicht. In besonders bevorzugten Ausführungsformen sind die unmittelbar vorstehenden Merkmale a. bis f. alle gleichzeitig in Kombination miteinander verwirklicht.

Besonders bevorzugt besteht der Anodenstromkollektor aus Kupfer oder einer Kupferlegierung während gleichzeitig der Kathodenstromkollektor aus Aluminium oder einer Aluminiumlegierung besteht.

Neben Stromkollektoren, die vollständig aus dem mindestens einen Metall bestehen, können aber durchaus auch Stromkollektoren eingesetzt werden, bei denen die aus dem mindestens einen Metall bestehende Oberfläche eine nichtmetallische Struktur, beispielsweise ein textiles Flächengebilde bestehend aus Filamenten aus Glas oder Kunststoff, umschließt. Der Begriff "textiles Flächengebilde" hierbei insbesondere Vlies, Gewebe, Netze und Gewirke.

In einer besonders bevorzugten Ausführungsform besteht der Kathodenstromkollektor aus einer Aluminiumfolie, bevorzugt mit einer Dicke im Bereich von 5 µm bis 30 µm. Besonders bevorzugt besteht der Anodenstromkollektor aus Kupferfolie, bevorzugt mit einer Dicke im Bereich von 5 µm bis 15 µm, oder aus Nickelfolie, bevorzugt mit einer Dicke im Bereich von 3 µm bis 10 µm.

In besonders bevorzugten Ausführungsformen zeichnen sich die Stromkollektoren der erfindungsgemäßen Zelle und damit auch die erfindungsgemäße Zelle selbst durch mindestens eines der unmittelbar folgenden zusätzlichen Merkmale a. bis d. aus:
a. Der Anodenstromkollektor weist zwei Flachseiten auf, die von mindestens einem Rand voneinander getrennt sind.
b. Der Anodenstromkollektor ist auf den beiden Flachseiten mit der mindestens einen Schicht aus dem negativen Elektrodenaktivmaterial beladen.
c. Die Oberfläche des Anodenstromkollektors umfasst einen mit dem Stützmaterial beschichteten freien Bereich, der in zwei Teilbereiche auf dessen beiden Flachseiten unterteilt ist.
d. Die beiden Teilbereiche des Anodenstromkollektors sind mit dem Stützmaterial beschichtet.

Besonders bevorzugt sind die unmittelbar vorstehenden Merkmale a. bis d. alle gleichzeitig in Kombination miteinander verwirklicht.

In besonders bevorzugten Ausführungsformen zeichnen sich die Stromkollektoren der erfindungsgemäßen Zelle und damit auch die erfindungsgemäße Zelle selbst durch mindestens eines der unmittelbar folgenden zusätzlichen Merkmale a. bis d. aus:
a. Der Kathodenstromkollektor weist zwei Flachseiten auf, die von mindestens einem Rand voneinander getrennt sind.
b. Der Kathodenstromkollektor ist auf den beiden Flachseiten mit der mindestens einen Schicht aus dem positiven Elektrodenaktivmaterial beladen.
c. Die Oberfläche des Kathodenstromkollektors umfasst einen mit dem Stützmaterial beschichteten freien Bereich, der in zwei Teilbereiche auf dessen beiden Flachseiten unterteilt ist.
d. Die beiden Teilbereiche des Kathodenstromkollektors sind mit dem Stützmaterial beschichtet.

Besonders bevorzugt sind die unmittelbar vorstehenden Merkmale a. bis d. alle gleichzeitig in Kombination miteinander verwirklicht.

Der freie Bereich oder die Teilbereiche können ganz oder teilweise mit dem Stützmaterial beschichtet sein. Der mindestens eine Rand, der die Flachseiten und damit auch die zwei Teilbereiche voneinander trennt, ist hingegen bevorzugt nicht mit dem Stützmaterial beschichtet.

In einer Weiterbildung weisen sowohl der Kathoden- als auch der Anodenstromkollektor besagte Flachseiten und mit dem Stützmaterial beschichtete, in zwei Teilbereiche unterteilte freie Bereiche auf. Dies gilt insbesondere dann, wenn als Kathoden- als auch der Anodenstromkollektor jeweils eine Folie oder eines anderes erwähnten Substrate, etwa die erwähnten textilen Flächengebilde, verwendet werden. Bei solchen Substraten entspricht die Oberfläche der Stromkollektoren im Wesentlichen den Flächen der beiden Flachseiten. Der mindestens eine Rand kann bei der quantitativen Erfassung der Oberfläche vernachlässigt werden. Aufgrund der geringen Dicke der genannten Substrate macht er in aller Regel keinen relevanten Anteil an der Oberfläche der Stromkollektoren aus.

Besonders bevorzugt sind sowohl die zwei Teilbereiche auf dem Kathoden- als auch die zwei Teilbereiche auf dem Anodenstromkollektor mit dem Stützmaterial beschichtet.

Besonders bevorzugt ist nicht nur der mindestens eine freie Bereich auf der Oberfläche des Anodenstromkollektors und/oder der Oberfläche des Kathodenstromkollektors mit dem Stützmaterial beschichtet. Vielmehr kann es bevorzugt sein, dass gleichzeitig auch die Schichten aus dem positiven und dem negativen Elektrodenmaterialien mit dem Stützmaterial beschichtet sind. Aus verfahrenstechnischen Gründen ist es einfacher, bei der Aufbringung des Stützmaterials auf den mindestens einen freien Bereich das Stützmaterial auch auf die Schichten aus dem Elektrodenmaterial aufzubringen, da ansonsten eine Maskierung dieser Schichten erforderlich sein kann.

Bei dem keramischen Material handelt es sich in bevorzugten Ausführungsformen um Aluminiumoxid (Al₂O₃), um Titanoxid (TiO₂), um Titannitrid (TiN), um Titanaluminiumnitrid (TiAlN) oder um Titancarbonitrid (TiCN).

Der Begriff keramisches Material ist vorliegend breit auszulegen. Insbesondere sind hierunter Carbide, Nitride, Oxide, Silicide oder Mischungen und Derivate dieser Verbindungen zu verstehen. Erfindungsgemäß ist das Stützmaterial besonders bevorzugt gemäß dem unmittelbar vorstehenden Merkmal c. ausgebildet.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

In einer ersten besonders bevorzugten Variante der erfindungsgemäßen Zelle zeichnet sich diese durch mindestens eines der unmittelbar folgenden zusätzlichen Merkmale a. bis g. aus:
a. Der Elektroden-Separator-Verbund liegt in Form eines Wickels mit zwei endständigen Stirnseiten vor.
b. Der Elektroden-Separator-Verbund sowie der von diesem umfasste mindestens eine Separator, die davon umfassten Elektroden und damit auch der Anodenstromkollektor und der Kathodenstromkollektor, sind bandförmig ausgebildet und weisen jeweils zwei Längsränder auf.
c. Die zwei endständigen Stirnseiten des Elektroden-Separator-Verbunds werden von den Längsrändern des mindestens einen Separators gebildet.
d. Sowohl die Oberfläche des Anodenstromkollektors als auch die Oberfläche des Kathodenstromkollektors umfasst jeweils einen freien Bereich, der nicht mit Elektrodenaktivmaterial beladen ist.
e. Bei dem freien Bereich auf der Oberfläche des Anodenstromkollektors handelt es sich um einen streifenförmigen Randbereich entlang einem seiner beiden Längsränder.
f. Bei dem freien Bereich auf der Oberfläche des Kathodenstromkollektors handelt es sich um einen streifenförmigen Randbereich entlang einem seiner beiden Längsränder.
g. Die bandförmige Anode und die bandförmige Kathode sind innerhalb des Elektroden-Separator-Verbunds versetzt zueinander angeordnet, so dass
   - der Längsrand des Anodenstromkollektors zusammen mit dem freien Bereich des Anodenstromkollektors aus einer der zwei endständigen Stirnseiten und
   - der Längsrand des Kathodenstromkollektors zusammen mit dem freien Bereich des Kathodenstromkollektors aus der anderen der beiden endständigen Stirnseiten
   austritt.

Bevorzugt sind die unmittelbar vorstehenden Merkmale a. bis g. alle gleichzeitig in Kombination miteinander verwirklicht.

Auch bei dieser wickelförmigen Konfiguration des Elektroden-Separator-Verbundes weisen die Stromkollektoren bevorzugt zwei Flachseiten auf und sind bevorzugt jeweils beidseitig mit den Schichten aus den jeweiligen Elektrodenmaterialien beladen. Besonders bevorzugt sind sowohl der Randbereich auf der Oberfläche des Anodenstromkollektors als auch der Randbereich auf der Oberfläche des Kathodenstromkollektors durch den jeweiligen Längsrand, entlang dem sie sich erstrecken, in zwei jeweils streifenförmig ausgebildete Teilbereiche unterteilt, von denen alle mit dem Stützmaterial beschichtet ist. Besonders bevorzugt sind die Teilbereiche jeweils mit einem Streifen aus dem Stützmaterial beschichtet. Die Stromkollektoren sind dann also nicht nur beidseitig mit den jeweiligen Elektrodenmaterialien beladen sondern auch beidseitig mit dem Stützmaterial beschichtet. Die Längsränder sind bevorzugt nicht mit dem Stützmaterial beschichtet.

Bei der Herstellung von Elektroden-Separator-Verbünden wird üblicherweise darauf geachtet, dass Elektroden und Stromkollektoren derart miteinander kombiniert werden, dass es nicht zu einem einseitigen Überstehen entgegengesetzt gepolter Stromkollektoren kommt, da dies die Kurzschlussgefahr erhöhen kann. Bei der beschriebenen versetzten Anordnung ist die Kurzschlussgefahr jedoch minimiert, da die entgegengesetzt gepolten Stromkollektoren aus sich gegenüberliegenden Stirnseiten des Wickels austreten.

Der Wickel weist bevorzugt eine maximale Höhe im Bereich von 30 mm bis 100 mm und einen maximalen Durchmesser im Bereich von 10 mm bis 45 mm auf.

Die bandförmig ausgebildeten Anoden- und Kathodenstromkollektoren weisen bevorzugt eine Länge im Bereich von 50 mm bis 300 cm, eine Breite im Bereich von 30 mm bis 100 mm und eine Dicke im Bereich von 30 µm bis 200 µm, auf.

Die streifenförmigen Randbereiche sowie die streifenförmigen Teilbereiche weisen bevorzugt eine Breite im Bereich von 0,5 mm bis 5 mm auf.

Bei dem Wickel handelt es sich in bevorzugten Ausführungsformen um einen zylindrischen Wickel. In weiteren Ausführungsformen kann es sich bei dem Wickel aber auch um einen prismatischen Flachwickel handeln. Bekanntlich ähnelt der Aufbau eines prismatischen Flachwickels dem Aufbau eines zylindrischen Wickels. Allerdings wird der Elektroden-Separator-Verbund zur Herstellung eines Flachwickels nicht spiralförmig um eine Achse sondern flach gewickelt, so dass der zu dem Flachwickel verarbeitete Verbund planare, nicht gewölbte Abschnitte umfasst, die in dem Flachwickel stapelartig übereinander liegen.

In einer zweiten besonders bevorzugten Variante der erfindungsgemäßen Zelle zeichnet sich diese durch mindestens eines der unmittelbar folgenden zusätzlichen Merkmale a. bis e. aus:
a. Der Elektroden-Separator-Verbund ist mit mindestens einem weiteren identischen Elektroden-Separator-Verbund Bestandteil eines Stapels, in dem die mindestens zwei Elektroden-Separator-Verbünde gestapelt übereinander liegen.
b. Die mindestens zwei Elektroden-Separator-Verbünde sowie deren Anoden, Kathoden und Separatoren sowie damit auch deren Anodenstromkollektoren und der Kathodenstromkollektoren weisen jeweils mindestens einen Längsrand auf.
c. Die Anodenstromkollektoren weisen jeweils einen freien Bereich, insbesondere in Form eines streifenförmigen Randbereichs, entlang ihres Längsrands oder eines ihrer Längsränder auf.
d. Die Kathodenstromkollektoren weisen jeweils einen freien Bereich, insbesondere in Form eines streifenförmigen Randbereichs, entlang ihres Längsrands oder eines ihrer Längsränder auf.
e. Die Anoden und die Kathoden der mindestens zwei Elektroden-Separator-Verbünde sind innerhalb des Stapels und damit auch innerhalb der Verbünde versetzt zueinander angeordnet, so dass
   - auf einer Seite des Stapels die freien Bereiche der Anodenstromkollektoren und
   - auf einer weiteren Seite des Stapels die freien Bereiche der Kathodenstromkollektoren
   überlappen.

Bevorzugt sind die unmittelbar vorstehenden Merkmale a. bis e. alle gleichzeitig in Kombination miteinander verwirklicht.

Auch bei dieser stapelförmigen Konfiguration weisen die Stromkollektoren bevorzugt zwei Flachseiten auf und sind bevorzugt jeweils beidseitig mit den Schichten aus den jeweiligen Elektrodenmaterialien beladen. Besonders bevorzugt sind sowohl der Randbereich auf der Oberfläche des Anodenstromkollektors als auch der Randbereich auf der Oberfläche des Kathodenstromkollektors durch den jeweiligen Längsrand, entlang dem sie sich erstrecken, in zwei jeweils streifenförmig ausgebildete Teilbereiche unterteilt, von denen alle mit dem Stützmaterial beschichtet ist. Besonders bevorzugt sind die Teilbereiche jeweils mit einem Streifen aus dem Stützmaterial beschichtet. Die Stromkollektoren sind dann also nicht nur beidseitig mit den jeweiligen Elektrodenmaterialien beladen sondern auch beidseitig mit dem Stützmaterial beschichtet. Die Längsränder sind bevorzugt nicht mit dem Stützmaterial beschichtet.

Der Stapel weist bevorzugt eine maximale Höhe im Bereich von 5 mm bis 20 mm auf.

Die Anoden- und Kathodenstromkollektoren sind wie die Elektroden bevorzugt rechteckig ausgebildet. Besonders bevorzugt weisen sie eine Länge im Bereich von 100 mm bis 300 mm, eine Breite im Bereich von 50 mm bis 150 mm und eine Dicke im Bereich von 50 µm bis 250 µm, auf.

Die streifenförmigen Randbereiche sowie die streifenförmigen Teilbereiche weisen bevorzugt eine Breite im Bereich von 0,5 mm bis 5 mm auf.

Es ist bevorzugt, dass sich die erfindungsgemäße Zelle durch mindestens eines der unmittelbar folgenden zusätzlichen Merkmale a. bis d. auszeichnet:
a. Die Beschichtung des mindestens einen freien Bereichs mit dem Stützmaterial weist eine Dicke im Bereich von 0,015 bis 1,0 mm, bevorzugt von 0,05 bis 0,2 mm, auf.
b. Die mindestens eine Schicht aus dem negativen Elektrodenmaterial auf dem Anodenstromkollektor weist eine Dicke im Bereich von 0,03 bis 1,0 mm, bevorzugt von 0,1 bis 0,2 mm, auf.
c. Die mindestens eine Schicht aus dem positiven Elektrodenmaterial auf dem Kathodenstromkollektor weist eine Dicke im Bereich von 0,03 bis 1,0 mm, bevorzugt von 0,1 bis 0,2 mm, auf.
d. Die Dicke der Beschichtung mit dem Stützmaterial auf dem Anoden- oder Kathodenstromkollektor liegt zwischen 1 % und 100 % der Dicke der Schicht des darauf befindlichen Elektrodenmaterials.

Bevorzugt sind die unmittelbar vorstehenden Merkmale a. bis d. alle gleichzeitig in Kombination miteinander verwirklicht.

In einer Weiterbildung liegt die Dicke der Beschichtung mit dem Stützmaterial auf dem Anoden- oder Kathodenstromkollektor zwischen 5 % und 50 % der Dicke der Schicht des darauf befindlichen Elektrodenmaterials, besonders bevorzugt zwischen 2 % und 25 %.

Besonders bevorzugt zeichnet sich die erfindungsgemäße Zelle durch mindestens eines der unmittelbar folgenden zusätzlichen Merkmale a. bis c. aus:
a. Der Anodenstromkollektor und der Kathodenstromkollektor sind gemäß den Ansprüchen 3 und 4 ausgebildet, weisen also jeweils besagte zwei Flachseiten sowie und mit dem Stützmaterial beschichtete, in zwei Teilbereiche unterteilte freie Bereiche auf.
b. Die Zelle umfasst einen ersten elektrischen Leiter, der an den Rand des Anodenstromkollektors angeschweißt ist.
c. Die Zelle umfasst einen zweiten elektrischen Leiter, der an den Rand des Kathodenstromkollektors angeschweißt ist.

Bevorzugt sind die unmittelbar vorstehenden Merkmale a. bis d. alle gleichzeitig in Kombination miteinander verwirklicht.

Das Anschweißen der elektrischen Leiter kann insbesondere mittels Laserschweißen oder mittels WIG-Schweißen (Wolfram-Inertgas-Schweißen) erfolgen.

In einer bevorzugten Ausführungsform zeichnet sich die erfindungsgemäße Zelle zusätzlich durch mindestens eines der unmittelbar folgenden Merkmale a. bis c. aus:
a. Die Zelle ist gemäß Anspruch 6 ausgebildet, weist also den Elektroden-Separator-Verbund in Form eines Wickels mit den zwei endständigen Stirnseiten sowie den bandförmig ausgebildeten Anodenstromkollektor und den bandförmig ausgebildeten Kathodenstromkollektor, jeweils mit den zwei Längsrändern, auf.
b. Der erste elektrische Leiter ist an den Längsrand des bandförmig ausgebildeten Anodenstromkollektors, entlang dem sich der freie Bereich des Anodenstromkollektors erstreckt, angeschweißt.
c. Der zweite elektrische Leiter ist an den Längsrand des bandförmig ausgebildeten Kathodenstromkollektors, entlang dem sich der freie Bereich des Kathodenstromkollektors erstreckt, angeschweißt.

Bevorzugt sind die unmittelbar vorstehenden Merkmale a. bis c. alle gleichzeitig in Kombination miteinander verwirklicht.

In einer Weiterbildung der bevorzugten Ausführungsform gemäß den unmittelbar vorstehenden Merkmalen a. bis c. zeichnet sich die erfindungsgemäße Zelle zusätzlich durch mindestens eines der unmittelbar folgenden Merkmale a. bis d. aus:
a. Bei dem ersten elektrischen Leiter handelt es sich um eine metallische Kontaktplatte.
b. Bei dem zweiten elektrischen Leiter handelt es sich um eine metallische Kontaktplatte.
c. Die erste metallische Kontaktplatte liegt flach auf der Stirnseite des Wickels auf, aus der der Längsrand, an den die Kontaktplatte geschweißt ist, austritt.
d. Die zweite metallische Kontaktplatte liegt flach auf der Stirnseite des Wickels auf, aus der der Längsrand, an den die Kontaktplatte geschweißt ist, austritt.

Bevorzugt sind die unmittelbar vorstehenden Merkmale a. bis d. alle gleichzeitig in Kombination miteinander verwirklicht.

Bei dieser Weiterbildung der erfindungsgemäßen Zelle macht man sich den aus der versetzten Anordnung resultierenden Überstand der Stromkollektoren zunutze, indem man sie mittels der Kontaktplatten großflächig kontaktiert. Über die Kontaktplatten ist es möglich, die Stromkollektoren und damit auch die dazugehörigen Elektroden über ihre gesamte Länge elektrisch zu kontaktieren. Durch das flache Aufliegen auf den Stirnseiten des Wickels ergeben sich nämlich linienartige Kontaktzonen. Wenn der Elektroden-Separator-Verbund gemäß der Weiterbildung beispielsweise in Form eines spiralförmigen Wickels vorliegt, so weisen die aus den Stirnseiten des Wickels austretenden Längsränder des Anodenstromkollektors und des Kathodenstromkollektors ebenfalls eine spiralförmige Geometrie auf. Analoges gilt dann für die linienartigen Kontaktzonen, entlang der die Kontaktplatten mit den Längsrändern verschweißt sind.

Bevorzugt sind die Kontaktplatten mit den Längsrändern entlang der linienartigen Kontaktzone durch Verschweißung verbunden. Wie in der WO 2017/215900 A1 beschrieben, kann eine solche Konfiguration das Auftreten großer Ströme hervorragend abfangen.

Die Kontaktplatten können wiederum mit Polen der erfindungsgemäßen Zelle, beispielsweise einem positiven und einem negativen Gehäusepol, verbunden sein.

Die Kontaktplatten können mit den Längsrändern entlang der linienartigen Kontaktzone über mindestens eine Schweißnaht oder über eine Vielzahl von Schweißpunkten verbunden sein. Besonders bevorzugt umfassen die Längsränder einen oder mehrere Abschnitte, die jeweils über ihre gesamte Länge über eine Schweißnaht durchgehend mit den Kontaktplatten verbunden sind. Gegebenenfalls sind die Längsränder über ihre gesamte Länge durchgehend mit der Kontaktplatte verschweißt.

Bei der Verschweißung der Kontaktplatten mit den Längsrändern kann es zu den eingangs erwähnten Problemen, nämlich dem unbeabsichtigten Niederdrücken oder Schmelzen von Randbereichen der Stromkollektoren kommen. Diesen Problemen wirkt das Stützmaterial entgegen. Es stützt die Rändern der Stromkollektoren mechanisch und unterbindet ein Aufschmelzen der Ränder, insbesondere wenn die Stromkollektoren beidseitig mit dem Stützmaterial beschichtet sind. Des Weiteren beugt das Stützmaterial auch Kurzschlüssen vor, die aus dem eingangs erwähnten Schmelzen von Separatoren des Elektroden-Separator-Verbunds resultieren. Das Stützmaterial isoliert die damit abgedeckten freien Bereiche elektrisch.

Die Kontaktplatten sind bevorzugt Metallplatten mit einer Dicke im Bereich von 200 µm bis 1000 µm, bevorzugt 400 - 500 µm. Sie bestehen bevorzugt aus Aluminium, einer Aluminiumlegierung, Titan, einer Titanlegierung, Nickel, einer Nickellegierung, Edelstahl oder vernickeltem Stahl. Bevorzugt bestehe sie aus den gleichen Materialien wie die Stromkollektoren, an die sie angeschweißt sind.

Die Kontaktplatten weisen bevorzugt jeweils mindestens einen Schlitz und/oder mindestens eine Perforierung auf. Durch die Schlitze und/oder Perforierungen ist gewährleistet, dass sich die Kontaktplatte bei Schweißvorgängen nicht verzieht. Darüber hinaus ist gewährleistet, dass die Kontaktplatte das Eindringen von Elektrolyt in den wickel- oder stapelförmigen Elektroden-Separator-Verbund nicht behindert.

In bevorzugten Ausführungsformen haben die Kontaktplatten die Form einer Scheibe, insbesondere die Form einer kreisförmigen oder zumindest näherungsweise kreisförmigen Scheibe. Sie weisen dann also einen äußeren kreisförmigen oder zumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

In weiteren bevorzugten Ausführungsformen können die Kontaktplatten auch die Form eines Polygons, bevorzugt eines regelmäßigen Polygons, insbesondere eines regelmäßigen Polygons mit 4 bis 10 Ecken und Seiten, aufweisen.

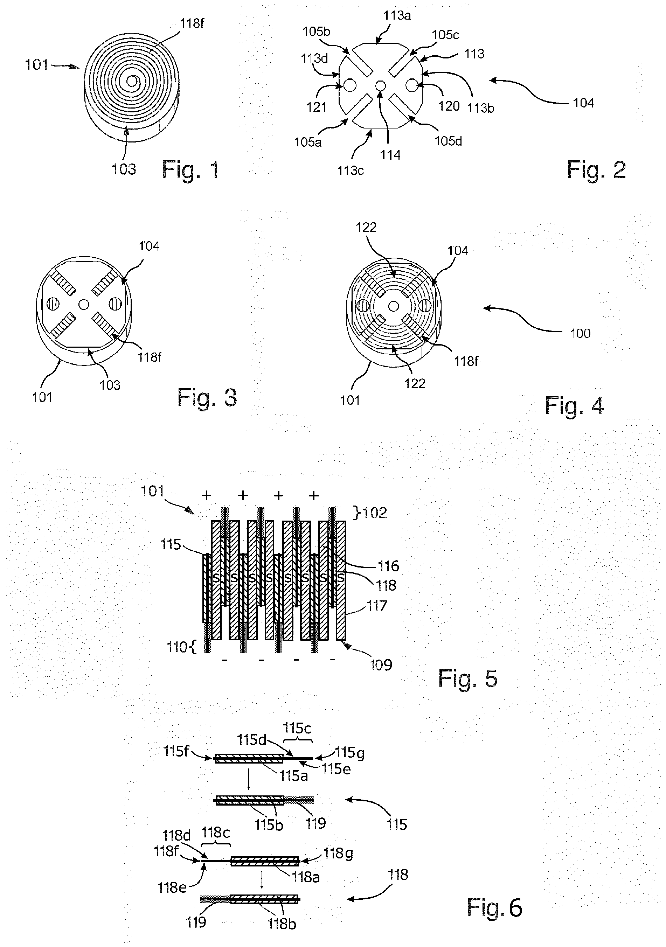

Die erfindungsgemäße Zelle ist in bevorzugten Ausführungsformen als Knopfzelle ausgebildet und weist ein metallisches Gehäuse aus zwei Gehäuseteilen aus, die durch eine elektrisch isolierende Dichtung voneinander isoliert sind, beispielsweise wie es in Fig. 1 der DE 10 2009 060 800 A1 dargestellt ist. In diesem Fall kann die Kontaktplatte beispielsweise mit dem positiv gepolten Gehäusehalbteil verbunden sein. Die Zelle kann aber auch eine Rundzelle sein, also eine Höhe aufweisen, die größer als ihr Durchmesser ist.

Die erfindungsgemäße Zelle kann aber auch mit mindestens einer weiteren identischen Zelle Bestandteil einer Batterie sein, wobei sie mit der mindestens einen weiteren identischen Zelle bevorzugt parallel oder seriell verschaltet ist und die beiden Zellen weiter bevorzugt ein gemeinsames Gehäuse und gegebenenfalls auch einen gemeinsamen Elektrolyten aufweisen.

Das erfindungsgemäße Verfahren zur Herstellung der beschriebenen elektrochemischen Zelle umfasst stets die folgenden Schritte:
a. Die Bereitstellung einer Anode, die einen Anodenstromkollektor umfasst, der eine aus mindestens einem Metall bestehende Oberfläche aufweist, die mit mindestens einer Schicht aus einem negativen Elektrodenaktivmaterial beladen ist,
b. die Bereitstellung einer Kathode, die einen Kathodenstromkollektor umfasst, der eine aus mindestens einem Metall bestehende Oberfläche aufweist, die mit mindestens einer Schicht aus einem positiven Elektrodenaktivmaterial beladen ist, und
c. die Fertigung eines Elektroden-Separator-Verbundes mit einer Anode, mindestens einem Separator und einer Kathode unter Verwendung der bereitgestellten Anode und der bereitgestellten Kathode.

Erfindungsgemäß wird vor oder nach der Fertigung des Elektroden-Separator-Verbundes
d. ein freier Bereich auf der Oberfläche des Anodenstromkollektors, der nicht mit dem negativen Elektrodenaktivmaterial beladen ist, und/oder ein freier Bereich auf der Oberfläche des Kathodenstromkollektors, der nicht mit dem positiven Elektrodenaktivmaterial beladen ist, mit einem Stützmaterial beschichtet, das thermisch beständiger als die damit beschichtete Oberfläche ist, wobei es sich bei dem Stützmaterial um ein keramisches Material, ein glaskeramisches Material oder um ein Glas handelt.

Die in dem Verfahren zum Einsatz kommenden Materialien und Zellbestandteile wurden bei der Beschreibung der erfindungsgemäßen Zelle bereits beschrieben. Auf diese Ausführungen wird hiermit Bezug genommen.

In bevorzugten Ausführungsformen zeichnet sich das Verfahren durch eines der folgenden zusätzlichen Merkmale aus:
a. Das Stützmaterial wird aus der Gasphase auf dem oder den freien Bereichen abgeschieden.
b. Das Stützmaterial wird als Bestandteil einer Suspension oder Paste auf den oder die freien Bereiche aufgebracht.
c. Das Stützmaterial wird aus einem Sol-Gel-Prozess gewonnen.

Die optimale Vorgehensweise zur Beschichtung der Stromkollektoren mit dem Stützmaterial hängt von derArt des Stützmaterials ab. Das Abscheiden aus der Gasphase kann beispielsweise mittels eines CVD- oder eines PVD-Verfahrens (CVD = chemical vapour deposition, CVD = physical vapour deposition) oder einer Variante dieser Verfahren (beispielsweise mittels "atomic layer deposition", ALD-Verfahren) erfolgen. Während beim PVD-Verfahren das abzuscheidende Material oftmals als solches bereits als Dampf in der Gasphase vorliegt (es wird durch physikalische Verfahren in die Gasphase gebracht), werden beim CVD-Verfahren chemische Verbindungen der abzuscheidenden Elemente (sog. Vorläufer) verdampft. Diese zersetzen sich an der Oberfläche des Substrates zu dem gewünschten Filmmaterial. Beim PVD-Verfahren können Beschichtungen durch Bedampfen, Sputtern, Ionenplattieren sowie Varianten dieser Prozesse gebildet werden.

Beschichtungen aus Aluminiumoxid lassen sich beispielsweise ausgehend von metallorganischen Aluminiumverbindungen wie Trimethylaluminium als Vorläufern herstellen. Auch Beschichtungen aus dem erwähnten Titancarbonitrid (TiCN) lassen sich insbesondere mittels CVD-Verfahren herstellen. TiN-Beschichtungen und Ti-AlN-Beschichtungen lassen sich mittels PVD herstellen. Entsprechende Vorgehensweisen sind literaturbekannt.

Das Aufbringen der Suspension oder der Paste kann mittels üblicher Beschichtungsverfahren wie Sprühverfahren, Dipcoating, Drucken und Extrusion erfolgen.

Oxidische Beschichtungen wie Aluminiumoxid-Beschichtungen lassen sich weiterhin auch über literaturbekannte Sol-Gel-Prozesse herstellen. Die Herstellung von Aluminiumoxid kann beispielsweise ausgehend von Aluminiumalkylen wie Aluminium-tri-sekundär-butylat oder von Aluminium-tri-isopropylat erfolgen

Grundsätzlich ist es möglich, das Stützmaterial auf die Stromkollektoren aufzubringen, bevor diese mit den Elektrodenmaterialien beladen werden. In diesem Fall ist es zweckmäßig, die Bereiche der Stromkollektoren, die in einem Folgeschritt mit den Elektrodenaktivmaterialien beladen werden sollen, zu maskieren. Vorzugsweise wird das Stützmaterial jedoch auf bereits mit den Elektrodenaktivmaterialien beladene Stromkollektoren aufgebracht. In diesem Fall ist es möglich, bei entsprechender Maskierung lediglich die genannten freien Bereiche zu beschichten. Aus verfahrenstechnischen Gründen kann es aber bevorzugt sein, nicht nur die freien Bereiche mit dem Stützmaterial zu beschichten sondern die Elektroden insgesamt, also auch die Schichten aus den Elektrodenaktivmaterialien. In diesem Fall erübrigt sich eine Maskierung.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In den Figuren 1 und 5 ist schematisch in einer Draufsicht schräg von oben und im Querschnitt eine Ausführungsform eines als spiralförmiger Wickel ausgebildeten Elektroden-Separator-Verbunds 101 dargestellt, der sich zu einer erfindungsgemäßen Zelle 100 verarbeiten lässt. Der Wickel weist zwei endständige Stirnseiten 103 und 109 auf, von denen in Fig. 1 nur eine, die Stirnseite 103, sichtbar ist. Der Elektroden-Separator-Verbund 101 umfasst die bandförmige Anode 115 und die bandförmige Kathode 118, die durch die bandförmigen Separatoren 116 und 117 voneinander getrennt sind.

Die zwei endständigen Stirnseiten 103 und 109 werden von den Längsrändern der bandförmigen Separatoren 116 und 117 gebildet. Innerhalb des Elektroden-Separator-Verbunds 100 sind die Elektroden 115 und 118 versetzt zueinander angeordnet, so dass ein Längsrand der Anode 115 aus einer der Stirnseiten heraustritt und den Überstand 110 bildet, während ein Längsrand der Kathode 118 aus der gegenüberliegenden Stirnseite austritt und den Überstand 102 bildet.

Figur 6 dient zur Veranschaulichung des Aufbaus des in den Figuren 1 und 5 dargestellten Wickels. Dargestellt ist hier ein Querschnitt durch die Anode 115 und die Kathode 118 sowie jeweils eines Vorläufers der beiden Elektroden 115 und 118. Die Vorläufer unterscheiden sich von den Elektroden 115 und 118 lediglich dadurch, dass letztere jeweils eine Beschichtung aus dem Stützmaterial 119 aufweisen. Wie die Elektroden 115 und 118 umfassen sie den Anodenstromkollektor 115a und den Kathodenstromkollektor 118a. Bei dem Anodenstromkollektor 115a handelt es sich um eine Kupferfolie. Bei dem Kathodenstromkollektor 118a handelt es sich um eine Aluminiumfolie. Die Folien weisen jeweils zwei Flachseiten 115d, 115e sowie 118d, 118e auf, die durch die Längsränder 115f, 115g sowie 118f, 118g voneinander getrennt, und jeweils beidseitig mit einer Schicht 115b; 118b aus Elektrodenaktivmaterialien beladen sind.

Die Oberfläche des Anodenstromkollektors 115a und die Oberfläche des Kathodenstromkollektors 118a umfassen jeweils einen streifenförmigen freien Bereich 115c; 118c, der nicht mit dem jeweiligen Elektrodenaktivmaterial beladen ist. Diese freien Bereiche umfassen jeweils zwei streifenförmige Teilbereiche auf den beiden Flachseiten 115d, 115e des Anodenstromkollektors 115a und den beiden Flachseiten 118d, 118e des Kathodenstromkollektors 118a. Diese Teilbereiche sind bei den Elektroden des Wickels 101 jeweils mit einer Schicht aus Aluminiumoxid als Stützmaterial 119 beschichtet. Die Längsränder 118f und 115g selbst sind frei von dem Stützmaterial 119.

Die freien Bereiche 115c und 118c sind durch das beidseitig aufgetragene Stützmaterial 119 stabiler gegen mechanische und thermische Belastungen. Darüber hinaus isoliert das Stützmaterial 119 die Bereiche 115c und 118c elektrisch.

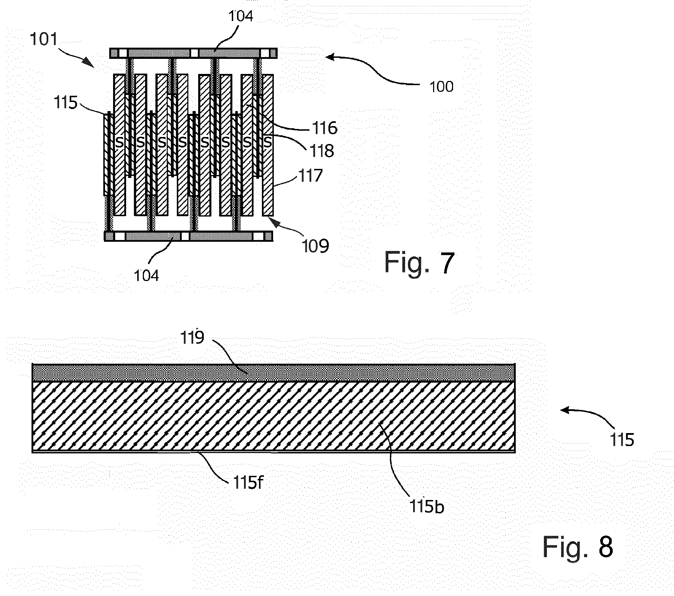

Eine Draufsicht auf die in Fig. 6 im Querschnitt dargestellte Anode 115 ist in Fig. 8 dargestellt.

Bei dem in den Figuren 1 und 5 dargestellten, als Wickel ausgebildeten Elektroden-Separator-Verbund 101 tritt der Längsrand 115g des Anodenstromkollektors 115a zusammen mit dem mit dem Stützmaterial 119 beschichteten freien Bereich 115c aus der endständigen Stirnseite 109 aus. Der Längsrand 118f des Kathodenstromkollektors 118a tritt zusammen mit dem freien Bereich 118c aus der endständigen Stirnseite 103 aus. Die austretenden Längsränder 115g und 118f weisen als Folge der spiralförmigen Wicklung des Elektroden-Separator-Verbunds 101 gleichfalls eine spiralförmige Geometrie auf.

Zur Herstellung der erfindungsgemäßen Zelle 100 werden zwei Kontaktplatten 104 flach auf die Stirnseiten 103 und 109 des Wickels aufgelegt. In Fig. 3 ist das Auflegen der Kontaktplatte 104 auf die Stirnseite 103 dargestellt. Zwischen den Kontaktplatten und den aus den Stirnseiten 103 und 109 austretenden Längsrändern 115g und 118f ergeben sich linienartige Kontaktzonen. Die Kontaktplatten werden mit den Längsrändern 115g und 118f entlang der linienartigen Kontaktzone durch Verschweißung verbunden. Dadurch ist es möglich, die Stromkollektoren 115a und 118a über ihre gesamte Länge elektrisch zu kontaktieren.

Die Kontaktplatten 104 sind in Fig. 2 dargestellt. Sie sind als näherungsweise kreisförmige Scheiben ausgebildet. Nur näherungsweise deshalb, weil der Scheibenrand 113 an vier Stellen 113a bis 113d, an denen jeweils ein flaches Kreissegment abgetrennt ist, von einer perfekten Kreisgeometrie abweicht. Die Kontaktplatte 104 weist die Schlitze 105a, 105b, 105c und 105d auf. Die vier Schlitze sind ausgehend von dem äußeren Scheibenrand 113 radial in Richtung des Zentrums der Kontaktplatte ausgerichtet. In ihrem Zentrum weist die Kontaktplatte 104 einen Durchlass 114 in Form eines kreisrunden Lochs auf. Zwei weitere Durchlässe 120 und 121 finden sich rechts und links der zentralen Öffnung 114. Diese können als Positionierungshilfen bei der Montage der Kontaktplatte 104 dienen.

Das Ergebnis der Verschweißung ist in den Figuren 4 (Draufsicht schräg von oben) und 7 (Querschnitt) dargestellt. Verbunden sind die Kontaktplatte 104 und der Längsrand 118f über die Schweißnaht 122. Diese weist hierbei denselben spiralförmigen Verlauf wie der Längsrand 118f. Die Schweißnaht 122 folgt exakt dem spiralförmigen Verlauf des Längsrands 118f. Allerdings ist es aufgrund der Schlitze 105a bis 105d nicht möglich, dass der Längsrand 118f über seine gesamte Länge durchgehend mit der Kontaktplatte 104 verschweißt ist. Stattdessen umfasst der Längsrand 118f - unterbrochen durch die Schlitze 105a bis 105d - eine Vielzahl von Abschnitten, die jeweils über ihre gesamte Länge über die Schweißnaht 122 entlang der Kontaktzone durchgehend mit der Kontaktplatte 104 verbunden sind.

## Patentansprüche

1. Elektrochemische Zelle (100) mit den Merkmalen
a. die Zelle umfasst einen Elektroden-Separator-Verbund (101) mit einer Anode (115), mindestens einem Separator (116, 117) und einer Kathode (118), und
b. die Anode (115) umfasst einen Anodenstromkollektor (115a), der eine aus mindestens einem Metall bestehende Oberfläche aufweist, die mit mindestens einer Schicht (115b) aus einem negativen Elektrodenaktivmaterial beladen ist, und
c. die Kathode (118) umfasst einen Kathodenstromkollektor (118a), der eine aus mindestens einem Metall bestehende Oberfläche aufweist, die mit mindestens einer Schicht (118b) aus einem positiven Elektrodenaktivmaterial beladen ist, und
d. die Oberfläche des Anodenstromkollektors (115a) und/oder die Oberfläche des Kathodenstromkollektors (118a) umfasst mindestens einen freien Bereich (115c; 118c), der nicht mit dem jeweiligen Elektrodenaktivmaterial beladen ist,
sowie dem zusätzlichen Merkmal
e. in dem mindestens einen freien Bereich (115c; 118c) ist die Oberfläche des Anodenstromkollektors (115a) und/oder die Oberfläche des Kathodenstromkollektors (118a) mit einem Stützmaterial (119) beschichtet, das thermisch beständiger als die damit beschichtete Oberfläche ist, wobei es sich bei dem Stützmaterial um ein keramisches Material, ein glaskeramisches Material oder um ein Glas handelt.

2. Elektrochemische Zelle nach Anspruch 1 mit den folgenden zusätzlichen Merkmalen:
a. Das mindestens eine Metall, aus dem die Oberfläche des Anodenstromkollektors (115a) besteht, umfasst mindestens ein Mitglied aus der Gruppe mit Kupfer, einer Kupferlegierung, Titan, einer Titanlegierung, Nickel, einer Nickellegierung und Edelstahl.
b. DerAnodenstromkollektor (115a) besteht aus dem mindestens einen Metall.
c. Der Anodenstromkollektor (115a) ist eine Metallfolie, ein Metallschaum, ein textiles Flächengebilde oder ein Streckmetall.
d. Das mindestens eine Metall, aus dem die Oberfläche des Kathodenstromkollektors (118a) besteht, umfasst mindestens ein Mitglied aus der Gruppe mit Aluminium, einer Aluminiumlegierung, Titan, einer Titanlegierung und Edelstahl.
e. Der Kathodenstromkollektor (118a) besteht aus dem mindestens einen Metall.
f. Der Kathodenstromkollektor (118a) ist eine Metallfolie, ein Metallschaum, ein textiles Flächengebilde oder ein Streckmetall.

3. Elektrochemische Zelle nach Anspruch 1 oder nach Anspruch 2 mit den folgenden zusätzlichen Merkmalen:
a. Der Anodenstromkollektor (115a) weist zwei Flachseiten (115d, 115e) auf, die von mindestens einem Rand (115f, 115g) voneinander getrennt sind.
b. Der Anodenstromkollektor (115a) ist auf den beiden Flachseiten (115d, 115e) mit der mindestens einen Schicht aus dem negativen Elektrodenaktivmaterial beladen.
c. Der mindestens eine freie Bereich umfasst zwei Teilbereiche auf den beiden Flachseiten (115d, 115e) des Anodenstromkollektors (115a).
d. Die beiden Teilbereiche des Anodenstromkollektors (115a) sind mit dem Stützmaterial (119) beschichtet.

4. Elektrochemische Zelle nach einem der vorhergehenden Ansprüche mit den folgenden zusätzlichen Merkmalen:
a. Der Kathodenstromkollektor (118a) weist zwei Flachseiten (118d, 118e) auf, die von mindestens einem Rand (118f, 118g) voneinander getrennt sind.
b. Der Kathodenstromkollektor (118a) ist auf den beiden Flachseiten (118d, 118e) mit der mindestens einen Schicht aus dem positiven Elektrodenaktivmaterial beladen.
c. Der mindestens eine freie Bereich (115c, 118c) umfasst zwei Teilbereiche auf den beiden Flachseiten (118d, 118e) des Kathodenstromkollektors (118a)
d. Die beiden Teilbereiche des Kathodenstromkollektors (118a) sind mit dem Stützmaterial (119) beschichtet.

5. Elektrochemische Zelle nach einem der vorhergehenden Ansprüche mit dem folgenden zusätzlichen Merkmal:
a. Bei dem keramischen Material handelt es sich um Aluminiumoxid (Al₂O₃) oder um Titanoxid (TiO₂).

6. Elektrochemische Zelle nach einem der vorhergehenden Ansprüche mit den folgenden zusätzlichen Merkmalen:
a. Der Elektroden-Separator-Verbund (101) liegt in Form eines Wickels mit zwei endständigen Stirnseiten (103, 109) vor.
b. Der Elektroden-Separator-Verbund (101) sowie der von diesem umfasste mindestens eine Separator (116, 117), die davon umfassten Elektroden (115, 118) und damit auch der Anodenstromkollektor (115a) und der Kathodenstromkollektor (118a), sind bandförmig ausgebildet und weisen jeweils zwei Längsränder auf.
c. Die zwei endständigen Stirnseiten (103, 109) des Elektroden-Separator-Verbunds werden von den Längsrändern des mindestens einen Separators (116, 117) gebildet.
d. Sowohl die Oberfläche des Anodenstromkollektors (115a) als auch die Oberfläche des Kathodenstromkollektors (118a) umfasst jeweils einen freien Bereich (115c, 118c), der nicht mit Elektrodenaktivmaterial beladen ist.
e. Bei dem freien Bereich (115c) auf der Oberfläche des Anodenstromkollektors (115a) handelt es sich um einen streifenförmigen Randbereich entlang einem seiner beiden Längsränder (115g).
f. Bei dem freien Bereich (118c) auf der Oberfläche des Kathodenstromkollektors (118a) handelt es sich um einen streifenförmigen Randbereich entlang einem seiner beiden Längsränder (118f).
g. Die bandförmige Anode (115) und die bandförmige Kathode (118) sind innerhalb des Elektroden-Separator-Verbunds (100) versetzt zueinander angeordnet, so dass
• der Längsrand (115g) des Anodenstromkollektors (115a) zusammen mit dem freien Bereich (115c) des Anodenstromkollektors (115a) aus einer der zwei endständigen Stirnseiten (109) und
• der Längsrand (118f) des Kathodenstromkollektors (118a) zusammen mit dem freien Bereich (118c) des Kathodenstromkollektors (118a) aus der anderen der beiden endständigen Stirnseiten (103)
austritt.

7. Elektrochemische Zelle nach einem der vorhergehenden Ansprüche mit den folgenden zusätzlichen Merkmalen:
a. Der Elektroden-Separator-Verbund ist mit mindestens einem weiteren identischen Elektroden-Separator-Verbund Bestandteil eines Stapels, in dem die mindestens zwei Elektroden-Separator-Verbünde gestapelt übereinander liegen.
b. Die mindestens zwei Elektroden-Separator-Verbünde sowie deren Anoden, Kathoden und Separatoren sowie damit auch deren Anodenstromkollektoren und der Kathodenstromkollektoren weisen jeweils mindestens einen Längsrand auf.
c. Die Anodenstromkollektoren weisen jeweils einen freien Bereich entlang ihres Längsrands oder eines ihrer Längsränder auf.
d. Die Kathodenstromkollektoren weisen jeweils einen freien Bereich entlang ihres Längsrands oder eines ihrer Längsränder auf.
e. Die Anoden und die Kathoden der mindestens zwei Elektroden-Separator-Verbünde sind innerhalb des Stapels versetzt zueinander angeordnet, so dass
• auf einer Seite des Stapels die freien Bereiche der Anodenstromkollektoren und
• auf einer weiteren Seite des Stapels die freien Bereiche der Kathodenstromkollektoren überlappen.

8. Elektrochemische Zelle nach einem der vorhergehenden Ansprüche mit den folgenden zusätzlichen Merkmalen:
a. Die Beschichtung des mindestens einen freien Bereichs (115c, 118c) mit dem Stützmaterial (119) weist eine Dicke im Bereich von 0,015 bis 1,0 mm, bevorzugt von 0,05 bis 0,2 mm, auf.
b. Die mindestens eine Schicht (115b) aus dem negativen Elektrodenmaterial auf dem Anodenstromkollektor (115a) weist eine Dicke im Bereich von 0,03 bis 1,0 mm, bevorzugt von 0,1 bis 0,2 mm, auf.
c. Die mindestens eine Schicht (118b) aus dem positiven Elektrodenmaterial auf dem Kathodenstromkollektor (118a) weist eine Dicke im Bereich von 0,03 bis 1,0 mm, bevorzugt von 0,1 bis 0,2 mm, auf.
d. Die Dicke der Beschichtung mit dem Stützmaterial (119) auf dem Anoden- oder Kathodenstromkollektor beträgt 50 bis 100 % der Dicke der Schicht des darauf befindlichen Elektrodenmaterials.

9. Elektrochemische Zelle nach einem der vorhergehenden Ansprüche 2 bis 8 mit mindestens einem der folgenden zusätzlichen Merkmale:
a. Der Anodenstromkollektor (115a) und der Kathodenstromkollektor (118a) sind gemäß den Ansprüchen 3 und 4 ausgebildet.
b. Die Zelle (100) umfasst einen ersten elektrischen Leiter (104), der an den Rand (115g) des Anodenstromkollektors (115a) angeschweißt ist.
c. Die Zelle (100) umfasst einen zweiten elektrischen Leiter (104), der an den Rand (118f) des Kathodenstromkollektors (118a) angeschweißt ist.

10. Elektrochemische Zelle nach Anspruch 9 mit den folgenden zusätzlichen Merkmalen:
a. Die Zelle (100) ist gemäß Anspruch 6 ausgebildet.
b. Der erste elektrische Leiter (104) ist an den Längsrand (115g) des bandförmig ausgebildeten Anodenstromkollektors (115a), entlang dem sich der freie Bereich (115c) des Anodenstromkollektors (115a) erstreckt, angeschweißt.
c. Der zweite elektrische Leiter (104) ist an den Längsrand (118f) des bandförmig ausgebildeten Kathodenstromkollektors (118a), entlang dem sich der freie Bereich (118c) des Kathodenstromkollektors (118) erstreckt, angeschweißt.

11. Elektrochemische Zelle nach Anspruch 10 mit den folgenden zusätzlichen Merkmalen:
a. Bei dem ersten elektrischen Leiter (104) handelt es sich um eine metallische Kontaktplatte.
b. Bei dem zweiten elektrischen Leiter (104) handelt es sich um eine metallische Kontaktplatte.
c. Die erste metallische Kontaktplatte (104) liegt flach auf der Stirnseite (109) des Wickels auf, aus der der Längsrand (115g), an den die Kontaktplatte geschweißt ist, austritt.
d. Die zweite metallische Kontaktplatte (104) liegt flach auf der Stirnseite (103) des Wickels auf, aus der der Längsrand (118f), an den die Kontaktplatte geschweißt ist, austritt.

12. Elektrochemische Zelle nach einem der vorhergehenden Ansprüche, **gekennzeichnet durch** das folgende zusätzliche Merkmal:
a. Sie ist mit mindestens einer weiteren identischen Zelle Bestandteil einer Batterie.

13. Verfahren zur Herstellung einer elektrochemische Zelle (100) nach einem der Ansprüche 1 bis 11, umfassend die Schritte
a. die Bereitstellung einer Anode (115), die einen Anodenstromkollektor (115a) umfasst, der eine aus mindestens einem Metall bestehende Oberfläche aufweist, die mit mindestens einer Schicht (115b) aus einem negativen Elektrodenaktivmaterial beladen ist,
b. die Bereitstellung einer Kathode (118), die einen Kathodenstromkollektor (118a) umfasst, der eine aus mindestens einem Metall bestehende Oberfläche aufweist, die mit mindestens einer Schicht (118b) aus einem positiven Elektrodenaktivmaterial beladen ist, und
c. die Fertigung eines Elektroden-Separator-Verbundes (101) mit einer Anode, mindestens einem Separator und einer Kathode unter Verwendung der bereitgestellten Anode (115) und der bereitgestellten Kathode (118),
wobei vor oder nach der Fertigung des Elektroden-Separator-Verbundes
d. ein freier Bereich (115c) auf der Oberfläche des Anodenstromkollektors (115a), der nicht mit dem negativen Elektrodenaktivmaterial beladen ist, und/oder ein freier Bereich (118c) auf der Oberfläche des Kathodenstromkollektors (118a), der nicht mit dem positiven Elektrodenaktivmaterial beladen ist, mit einem Stützmaterial (119) beschichtet wird, das thermisch beständiger als die damit beschichtete Oberfläche ist, wobei es sich bei dem Stützmaterial um ein keramisches Material, ein glaskeramisches Material oder um ein Glas handelt.

14. Verfahren nach Anspruch 13, **gekennzeichnet durch** das folgende zusätzliche Merkmal
a. Das Stützmaterial (119) wird aus der Gasphase auf dem oder den freien Bereichen (115c, 118c) abgeschieden.
b. Das Stützmaterial (119) wird als Bestandteil einer Suspension oder Paste auf den oder die freien Bereiche (115c, 118c) aufgebracht.

## Claims

1. Electrochemical cell (100) having the following features:
a. the cell comprises an electrode-separator composite (101) having an anode (115), at least one separator (116, 117) and a cathode (118), and
b. the anode (115) comprises an anode current collector (115a) having a surface that consists of at least one metal and has been laden with at least one layer (115b) of a negative active electrode material, and
c. the cathode (118) comprises a cathode current collector (118a) having a surface that consists of at least one metal and has been laden with at least one layer (118b) of a positive active electrode material, and
d. the surface of the anode current collector (115a) and/or the surface of the cathode current collector (118a) comprises at least one clear region (115c; 118c) not laden with the respective active electrode material,
and the following additional feature:
e. in the at least one clear region (115c; 118c) the surface of the anode current collector (115a) and/or the surface of the cathode current collector (118a) has been coated with a support material (119) of greater thermal stability than the surface coated therewith, where the support material is a ceramic material, a glass-ceramic material or a glass.

2. Electrochemical cell according to Claim 1, having the following additional features:
a. The at least one metal of which the surface of the anode current collector (115a) consists comprises at least one member from the group comprising copper, a copper alloy, titanium, a titanium alloy, nickel, a nickel alloy and stainless steel.
b. The anode current collector (115a) consists of the at least one metal.
c. The anode current collector (115a) is a metal foil, a metal sponge, a textile fabric or an expanded metal.
d. The at least one metal of which the surface of the cathode current collector (118a) consists comprises at least one member from the group comprising aluminium, an aluminium alloy, titanium, a titanium alloy and stainless steel.
e. The cathode current collector (118a) consists of the at least one metal.
f. The cathode current collector (118a) is a metal foil, a metal sponge, a textile fabric or an expanded metal.

3. Electrochemical cell according to Claim 1 or according to Claim 2, having the following additional features:
a. The anode current collector (115a) has two flat sides (115d, 115e) separated from one another by at least one edge (115f, 115g).
b. The anode current collector (115a) is laden with the at least one layer of the negative active electrode material on the two flat sides (115d, 115e).
c. The at least one clear region comprises two subregions on the two flat sides (115d, 115e) of the anode current collector (115a).
d. The two subregions of the anode current collector (115a) are coated with the support material (119).

4. Electrochemical cell according to any of the preceding claims, having the following additional features:
a. The cathode current collector (118a) has two flat sides (118d, 118e) separated from one another by at least one edge (118f, 118g).
b. The cathode current collector (118a) is laden with the at least one layer of the positive active electrode material on the two flat sides (118d, 118e).
c. The at least one clear region (115c, 118c) comprises two subregions on the two flat sides (118d, 118e) of the cathode current collector (118a)
d. The two subregions of the cathode current collector (118a) are coated with the support material (119).

5. Electrochemical cell according to any of the preceding claims, having the following additional feature:
a. The ceramic material is aluminium oxide (Al₂O₃) or titanium oxide (TiO₂).

6. Electrochemical cell according to any of the preceding claims, having the following additional features:
a. The electrode-separator composite (101) is in the form of a winding with two terminal end faces (103, 109) .
b. The electrode-separator composite (101) and the at least one separator (116, 117) comprised therein, the electrodes (115, 118) comprised therein and hence also the anode current collector (115a) and the cathode current collector (118a) are in strip form and each have two longitudinal edges.
c. The two terminal end faces (103, 109) of the electrode-separator composite are formed by the longitudinal edges of the at least one separator (116, 117) .
d. Both the surface of the anode current collector (115a) and the surface of the cathode current collector (118a) comprise a clear region (115c, 118c) not laden with active electrode material.
e. The clear region (115c) on the surface of the anode current collector (115a) is an edge region in strip form along one of its two longitudinal edges (115g).
f. The clear region (118c) on the surface of the cathode current collector (118a) is an edge region in strip form along one of its two longitudinal edges (118f).
g. The anode (115) in strip form and the cathode (118) in strip form are arranged offset from one another within the electrode-separator composite (100), such that
• the longitudinal edge (115g) of the anode current collector (115a) together with the clear region (115c) of the anode current collector (115a) protrudes from one of the two terminal end faces (109) and
• the longitudinal edge (118f) of the cathode current collector (118a) together with the clear region (118c) of the cathode current collector (118a) protrudes from the other of the two terminal end faces (103).

7. Electrochemical cell according to any of the preceding claims, having the following additional features:
a. The electrode-separator composite, together with at least one further identical electrode-separator composite, is part of a stack in which the at least two electrode-separator composites are stacked one on top of another.
b. The at least two electrode-separator composites and their anodes, cathodes and separators and hence also their anode current collectors and the cathode current collectors each have at least one longitudinal edge.
c. The anode current collectors each have a clear region along their longitudinal edge or one of their longitudinal edges.
d. The cathode current collectors each have a clear region along their longitudinal edge or one of their longitudinal edges.
e. The anodes and the cathodes of the at least two electrode-separator composites are arranged offset from one another within the stack, such that
• the clear regions of the anode current collectors overlap on one side of the stack and
• the clear regions of the cathode current collectors overlap on a further side of the stack.

8. Electrochemical cell according to any of the preceding claims, having the following additional features:
a. The coating of the at least one clear region (115c, 118c) with the support material (119) has a thickness in the range from 0.015 to 1.0 mm, preferably from 0.05 to 0.2 mm.
b. The at least one layer (115b) of the negative electrode material on the anode current collector (115a) has a thickness in the range from 0.03 to 1.0 mm, preferably from 0.1 to 0.2 mm.
c. The at least one layer (118b) of the positive electrode material on the cathode current collector (118a) has a thickness in the range from 0.03 to 1.0 mm, preferably from 0.1 to 0.2 mm.
d. The thickness of the coating with the support material (119) on the anode current collector or cathode current collector is 50% to 100% of the thickness of the layer of the electrode material present thereon.

9. Electrochemical cell according to any of the preceding Claims 2 to 8, having at least one of the following additional features:
a. The anode current collector (115a) and the cathode current collector (118a) are designed according to Claims 3 and 4.
b. The cell (100) comprises a first electrical conductor (104) welded onto the edge (115g) of the anode current collector (115a).
c. The cell (100) comprises a second electrical conductor (104) welded onto the edge (118f) of the cathode current collector (118a).

10. Electrochemical cell according to Claim 9, having the following additional features:
a. The cell (100) is designed according to Claim 6.
b. The first electrical conductor (104) is welded onto the longitudinal edge (115g) of the anode current collector (115a) in strip form, along which the clear region (115c) of the anode current collector (115a) extends.
c. The second electrical conductor (104) is welded onto the longitudinal edge (118f) of the cathode current collector (118a) in strip form, along which the clear region (118c) of the cathode current collector (118) extends.

11. Electrochemical cell according to Claim 10, having the following additional features:
a. The first electrical conductor (104) is a metallic contact plate.
b. The second electrical conductor (104) is a metallic contact plate.
c. The first metallic contact plate (104) lies flat against the end face (109) of the winding from which the longitudinal edge (115g) to which the contact plate is welded protrudes.
d. The second metallic contact plate (104) lies flat against the end face (103) of the winding from which the longitudinal edge (118f) to which the contact plate is welded protrudes.

12. Electrochemical cell according to any of the preceding claims, **characterized by** the following additional feature:
a. Together with at least one further identical cell it is part of a battery.

13. Method of producing an electrochemical cell (100) according to any of Claims 1 to 11, comprising the steps of:
a. providing an anode (115) comprising an anode current collector (115a) having a surface that consists of at least one metal and has been laden with at least one layer (115b) of a negative active electrode material,
b. providing a cathode (118) comprising a cathode current collector (118a) having a surface that consists of at least one metal and has been laden with at least one layer (118b) of a positive active electrode material, and
c. manufacturing an electrode-separator composite (101) comprising an anode, at least one separator and a cathode using the anode (115) provided and the cathode (118) provided,
wherein the manufacture of the electrode-separator composite is preceded or followed by
d. coating a clear region (115c) on the surface of the anode current collector (115a) that has not been laden with the negative active electrode material and/or a clear region (118c) on the surface of the cathode current collector (118a) that has not been laden with the positive active electrode material with a support material (119) of greater thermal stability than the surface coated therewith, where the support material is a ceramic material, a glass-ceramic material or a glass.

14. Method according to Claim 13, **characterized by** the following additional feature:
a. The support material (119) is deposited on the clear region(s) (115c, 118c) from the gas phase.
b. The support material (119) is applied to the clear region(s) (115c, 118c) as part of a suspension or paste.

## Revendications

1. Cellule électrochimique (100) présentant les caractéristiques suivantes :
a. la cellule comprend un composite électrode-séparateur (101) pourvu d'une anode (115), d'au moins un séparateur (116, 117) et d'une cathode (118), et
b. l'anode (115) comprend un collecteur de courant anodique (115a) qui possède une surface qui comprend au moins un métal et qui est chargé d'au moins une couche (115b) d'un matériau actif d'électrode négative, et
c. la cathode (118) comprend un collecteur de courant cathodique (118a) qui possède une surface qui comprend au moins un métal et qui est chargé d'au moins une couche (118b) d'un matériau actif d'électrode positive, et
d. la surface du collecteur de courant anodique (115a) et/ou la surface du collecteur de courant cathodique (118a) comprend au moins une zone libre (115c ; 118c) qui n'est pas chargée du matériau d'électrode actif respectif,
ainsi que la caractéristique supplémentaire suivante :
e. dans l'au moins une zone libre (115c ; 118c), la surface du collecteur de courant anodique (115a) et/ou la surface du collecteur de courant cathodique (118a) est recouverte d'un matériau de support (119) qui est thermiquement plus résistant que la surface qui en est recouverte, le matériau de support étant un matériau céramique, un matériau vitrocéramique ou un verre.

2. Cellule électrochimique selon la revendication 1 présentant les caractéristiques supplémentaires suivantes :
a. l'au moins un métal, que comprend la surface du collecteur de courant anodique (115a), comprend au moins un élément sélectionné dans le groupe comprenant le cuivre, un alliage de cuivre, le titane, un alliage de titane, le nickel, un alliage de nickel et un acier spécial,
b. le collecteur de courant anodique (115a) comprend au moins un métal,
c. le collecteur de courant anodique (115a) est une feuille métallique, une mousse métallique, une structure surfacique textile ou un métal étiré,
d. l'au moins un métal, que comprend la surface du collecteur de courant cathodique (118a), comprend au moins un élément sélectionné dans le groupe comprenant l'aluminium, un alliage d'aluminium, le titane, un alliage de titane et un acier spécial,
e. le collecteur de courant cathodique (118a) comprend au moins un métal,
f. le collecteur de courant cathodique (118a) est une feuille métallique, une mousse métallique, une structure surfacique textile ou un métal déployé.

3. Cellule électrochimique selon la revendication 1 ou la revendication 2 présentant les caractéristiques supplémentaires suivantes :
a. le collecteur de courant anodique (115a) comporte deux côtés plats (115d, 115e) qui sont séparés l'un de l'autre par au moins un bord (115f, 115g),
b. le collecteur de courant anodique (115a) est chargé d'au moins une couche du matériau actif d'électrode négative sur les deux côtés plats (115d, 115e),
c. l'au moins une zone libre comprend deux sous-zones sur les deux côtés plats (115d, 115e) du collecteur de courant anodique (115a),
d. les deux sous-zones du collecteur de courant anodique (115a) sont recouvertes du matériau de support (119) .

4. Cellule électrochimique selon l'une des revendications précédentes présentant les caractéristiques supplémentaires suivantes :
a. le collecteur de courant cathodique (118a) comporte deux côtés plats (118d, 118e) qui sont séparés l'un de l'autre par au moins un bord (118f, 118g),
b. le collecteur de courant cathodique (118a) est chargé d'au moins une couche du matériau actif d'électrode positive sur les deux côtés plats (118d, 118e),
c. l'au moins une zone libre (115c, 118c) comprend deux sous-zones sur les deux côtés plats (118d, 118e) du collecteur de courant cathodique (118a),
d. les deux sous-zones du collecteur de courant cathodique (118a) sont recouvertes du matériau de support (119).

5. Cellule électrochimique selon l'une des revendications précédentes présentant la caractéristique supplémentaire suivante :
a. le matériau céramique est de l'oxyde d'aluminium (Al₂O₃) ou de l'oxyde de titane (TiO₃).

6. Cellule électrochimique selon l'une des revendications précédentes présentant les caractéristiques supplémentaires suivantes :
a. le composite électrode-séparateur (101) se présente sous la forme d'une bobine pourvue de deux côtés frontaux d'extrémité (103, 109),
b. le composite électrode-séparateur (101) et l'au moins un séparateur (116, 117) que ledit composite comprend, et les électrodes (115, 118) que ledit composite comprend et donc également le collecteur de courant anodique (115a) et le collecteur de courant cathodique (118a), sont conçus sous la forme d'une bande et comportent chacun deux bords longitudinaux,
c. les deux côtés frontaux d'extrémité (103, 109) du composite électrode-séparateur sont formés par les bords longitudinaux de l'au moins un séparateur (116, 117),
d. la surface du collecteur de courant anodique (115a) ainsi que la surface du collecteur de courant cathodique (118a) comprennent chacune une zone libre (115c, 118c) qui n'est pas chargée de matériau d'électrode actif,
e. la zone libre (115c) sur la surface du collecteur de courant anodique (115a) est une zone de bord en forme de bande le long de l'un de ses deux bords longitudinaux (115g),
f. la zone libre (118c) sur la surface du collecteur de courant cathodique (118a) est une zone de bord en forme de bande le long de l'un de ses deux bords longitudinaux (118f),
g. l'anode (115) en forme de bande et la cathode (118) en forme de bande sont disposées de manière décalée l'une par rapport à l'autre à l'intérieur du composite électrode-séparateur (100) de sorte que
• le bord longitudinal (115g) du collecteur de courant anodique (115a) sort, conjointement avec la zone libre (115c) du collecteur de courant anodique (115a), de l'un des deux côtés frontaux d'extrémité (109) et
• le bord longitudinal (118f) du collecteur de courant cathodique (118a) sort, conjointement avec la zone libre (118c) du collecteur de courant cathodique (118a), de l'autre des deux côtés frontaux d'extrémité (103) .

7. Cellule électrochimique selon l'une des revendications précédentes présentant les caractéristiques supplémentaires suivantes :
a. le composite électrode-séparateur fait partie, avec au moins un autre composite électrode-séparateur identique, d'un empilement dans lequel les au moins deux composites électrode-séparateur sont empilés l'un sur l'autre,
b. les au moins deux composites électrode-séparateur ainsi que leurs anodes, cathodes et séparateurs et donc également leurs collecteurs de courant anodiques et collecteurs de courant cathodiques comportent chacun au moins un bord longitudinal,
c. les collecteurs de courant anodiques comportent chacun une zone libre le long de leur bord longitudinal ou d'un de leurs bords longitudinaux,
d. les collecteurs de courant cathodiques comportent chacun une zone libre le long de leur bord longitudinal ou d'un de leurs bords longitudinaux,
e. les anodes et les cathodes des au moins deux composites électrode-séparateur sont disposées de manière décalée les unes par rapport aux autres à l'intérieur de l'empilement de sorte que
• sur un côté de l'empilement les zones libres des collecteurs de courant anodiques et
• sur un autre côté de l'empilement les zones libres des collecteurs de courant cathodiques
se chevauchent.

8. Cellule électrochimique selon l'une des revendications précédentes présentant les caractéristiques supplémentaires suivantes :
a. le revêtement de l'au moins une zone libre (115c, 118c) pourvu du matériau de support (119) a une épaisseur dans la gamme allant de 0,015 à 1,0 mm, de préférence de 0,05 et 0,2 mm,
b. l'au moins une couche (115b) du matériau d'électrode négative sur le collecteur de courant anodique (115a) a une épaisseur dans la gamme allant de 0,03 à 1,0 mm, de préférence de 0,1 à 0,2 mm,
c. l'au moins une couche (118b) du matériau d'électrode positive sur le collecteur de courant cathodique (118a) a une épaisseur dans la gamme allant de 0,03 à 1,0 mm, de préférence entre 0,1 et 0,2 mm.
d. l'épaisseur du revêtement pourvu du matériau de support (119) sur le collecteur de courant anodique ou cathodique représente 50 à 100 % de l'épaisseur de la couche de matériau d'électrode située dessus.

9. Cellule électrochimique selon l'une des revendications précédentes 2 à 8 présentant au moins une des caractéristiques supplémentaires suivantes :
a. le collecteur de courant anodique (115a) et le collecteur de courant cathodique (118a) sont conçus selon les revendications 3 et 4,
b. la cellule (100) comprend un premier conducteur électrique (104) qui est soudé au bord (115g) du collecteur de courant anodique (115a),
c. la cellule (100) comprend un deuxième conducteur électrique (104) qui est soudé au bord (118f) du collecteur de courant cathodique (118a).

10. Cellule électrochimique selon la revendication 9 présentant les caractéristiques supplémentaires suivantes :
a. la cellule (100) est conçue selon la revendication 6,
b. le premier conducteur électrique (104) est soudé au bord longitudinal (115g) du collecteur de courant anodique (115a) en forme de bande le long duquel s'étend la zone libre (115c) du collecteur de courant anodique (115a),
c. le deuxième conducteur électrique (104) est soudé au bord longitudinal (118f) du collecteur de courant cathodique (118a) en forme de bande le long duquel s'étend la zone libre (118c) du collecteur de courant cathodique (118).

11. Cellule électrochimique selon la revendication 10 présentant les caractéristiques supplémentaires suivantes :
a. le premier conducteur électrique (104) est une plaque de contact métallique,
b. le deuxième conducteur électrique (104) est une plaque de contact métallique,
c. la première plaque de contact métallique (104) repose à plat sur le côté frontal (109) de la bobine duquel sort le bord longitudinal (115g) auquel la plaque de contact est soudée,
d. la deuxième plaque de contact métallique (104) repose à plat sur le côté frontal (103) de la bobine duquel sort le bord longitudinal (118f) auquel la plaque de contact est soudée.

12. Cellule électrochimique selon l'une des revendications précédentes, **caractérisée par** la caractéristique supplémentaire suivante :
a. ladite cellule fait partie, avec au moins une autre cellule identique, d'une batterie.

13. Procédé de réalisation d'une cellule électrochimique (100) selon l'une des revendications 1 à 11, ledit procédé comprenant les étapes suivantes :
a. fournir une anode (115) qui comprend un collecteur de courant anodique (115a) qui a une surface qui comprend au moins un métal et qui est chargée d'au moins une couche (115b) d'un matériau actif d'électrode négative,
b. fournir une cathode (118) qui comprend un collecteur de courant cathodique (118a) possédant une surface qui comprend au moins un métal et qui est chargée d'au moins une couche (118b) d'un matériau actif d'électrode positive, et
c. réaliser un composite électrode-séparateur (101) comprenant une anode, au moins un séparateur et une cathode à l'aide de l'anode (115) et de la cathode (118) fournies,
avant ou après la réalisation du composite électrode-séparateur
d. une zone libre (115c) sur la surface du collecteur de courant anodique (115a) qui n'est pas chargée de matériau actif d'électrode négative, et/ou une zone libre (118c) sur la surface du collecteur de courant cathodique (118a) qui n'est pas chargé du matériau actif d'électrode positive, étant recouverte d'un matériau de support (119) qui est thermiquement plus résistant que la surface qui en est revêtue, le matériau de support étant un matériau céramique, un matériau vitrocéramique ou un verre.

14. Procédé selon la revendication 13, **caractérisé par** la caractéristique supplémentaire suivante :
a. le matériau de support (119) est déposé à partir de la phase gazeuse sur la ou les zones libres (115c, 118c).
b. le matériau de support (119) est appliqué sur la ou les zones libres (115c, 118c) en tant que partie d'une suspension ou d'une pâte.
